(19) Europäisches Patentamt / European Patent Office / Office européen des brevets

(11) **EP 3 329 240 B1**

(12) **FASCICULE DE BREVET EUROPEEN**

(45) Date de publication et mention
de la délivrance du brevet:
**14.04.2021 Bulletin 2021/15**

(21) Numéro de dépôt: **16762831.2**

(22) Date de dépôt: **28.07.2016**

(51) Int Cl.:
*G01M 11/02* (2006.01)  *G01B 11/24* (2006.01)
*G06K 9/00* (2006.01)  *G01N 21/958* (2006.01)
*G02C 13/00* (2006.01)

(86) Numéro de dépôt international:
**PCT/FR2016/051968**

(87) Numéro de publication internationale:
**WO 2017/017385 (02.02.2017 Gazette 2017/05)**

(54) **MÉTHODE DE VÉRIFICATION D'UN CONTOUR ET D'UNE CARACTERISTIQUE OPTIQUE D'UNE LENTILLE OPHTALMIQUE DETOUREE ET DISPOSITIF ASSOCIE**

VERFAHREN ZUR ÜBERPRÜFUNG EINER KONTUR UND EINER OPTISCHEN EIGENSCHAFT EINES ABGEKANTETEN BRILLENGLASES UND ZUGEHÖRIGE VORRICHTUNG

METHOD FOR CHECKING A SHAPE AND AN OPTICAL CHARACTERISTIC OF A TRIMMED OPHTHALMIC LENS AND ASSOCIATED DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2015 FR 1557327**

(43) Date de publication de la demande:
**06.06.2018 Bulletin 2018/23**

(73) Titulaire: **Essilor International**
**94220 Charenton-le-Pont (FR)**

(72) Inventeurs:
• **LEMAIRE, Cédric**
**94227 Charenton-le-Pont Cedex (FR)**
• **LIPPENS, Xavier**
**94227 Charenton-le-Pont Cedex (FR)**

(74) Mandataire: **Jacobacci Coralis Harle**
**32, rue de l'Arcade**
**75008 Paris (FR)**

(56) Documents cités:
EP-A1- 3 112 837    WO-A1-2005/121740
FR-A1- 2 710 162    FR-A1- 2 878 970
FR-A1- 2 893 152    FR-A1- 2 958 040
JP-A- H1 058 294    US-A- 5 828 446
US-A1- 2010 290 694

**Description**

DOMAINE TECHNIQUE AUQUEL SE RAPPORTE L'INVENTION

La présente invention concerne de manière générale le domaine des méthodes de vérification des lentilles ophtalmiques détourées.

Elle concerne plus particulièrement une méthode de vérification d'une caractéristique géométrique et d'une caractéristique optique d'une lentille ophtalmique détourée.

Elle concerne également un dispositif de vérification d'au moins une caractéristique géométrique et/ou optique d'une lentille ophtalmique détourée.

ARRIERE-PLAN TECHNOLOGIQUE

Les lentilles ophtalmiques destinées à être montées dans une monture de lunettes particulière sont fabriquées à partir d'une lentille initiale circulaire présentant les caractéristiques optiques requises par la prescription du porteur.

A cet effet, cette lentille initiale est détourée de manière à présenter un contour adapté à la monture de lunettes choisie par le porteur, ce contour étant centré dans la lentille initiale en fonction de caractéristiques géométrico-morphologiques du porteur, telles que l'écart interpupillaire et/ou en fonction de caractéristiques liées au placement de la monture sur le visage du porteur, par exemple la hauteur des pupilles par rapport au bord inférieur de la monture ou de la lentille en place sur la tête du porteur, et/ou en fonction de caractéristiques optiques souhaitées pour la lentille ophtalmique détourée en fonction de la prescription du porteur.

Ainsi, après le détourage de la lentille initiale, il est connu d'effectuer un contrôle de la lentille ophtalmique détourée obtenue, afin de vérifier, d'une part, que le contour final de la lentille ophtalmique détourée correspond bien au contour souhaité en fonction de la monture de lunettes choisie, et que les caractéristiques optiques de la lentille ophtalmique détourée correspondent bien aux caractéristiques optiques souhaitées en fonction du porteur et de la monture choisie.

Ce contrôle est réalisé manuellement et visuellement, en différentes étapes selon des protocoles non standardisés. Ce contrôle est ainsi long et fastidieux à effectuer. En outre, il est peu précis. On connaît également des documents US2010/290694, FR2893152, et WO2005/121740A1 des méthodes pour vérifier certaines caractéristiques d'une lentille avant son détourage.

Afin de remédier aux inconvénients précités de l'état de la technique, la présente invention propose une nouvelle méthode de vérification d'une caractéristique géométrique et d'une caractéristique optique d'une lentille ophtalmique détourée, autorisant un contrôle plus précis et plus rapide des lentilles détourées.

Plus particulièrement, on propose selon l'invention une méthode conforme à la revendication 1.

Ainsi, grâce à la méthode de vérification selon l'invention, il est possible de rendre le contrôle des lentilles ophtalmiques détourées automatique et systématique. Ce contrôle est effectué de manière rapide. Le délai de fabrication des lentilles ophtalmiques est raccourci.

En outre, la précision du contrôle des caractéristiques géométriques et des caractéristiques optiques de la lentille est améliorée.

Grâce à la méthode selon l'invention, le contour et les caractéristiques optiques de la lentille peuvent être vérifiés avant le montage de la lentille ophtalmique dans la monture choisie. La qualité des lentilles ophtalmiques détourées envoyées à l'opticien pour un montage ultérieur dans la monture est assurée.

En outre, grâce à la méthode selon l'invention, les défauts de la caractéristique géométrique ou de la caractéristique optique mesurées peuvent être quantifiés et enregistrés afin d'établir des bases de données statistiques sur les lentilles ophtalmiques détourées. La traçabilité des lentilles ophtalmiques est améliorée.

D'autres caractéristiques non limitatives et avantageuses de la méthode conforme à l'invention, prises individuellement ou selon toutes les combinaisons techniquement possibles, sont énoncées dans les revendications 2 à 10.

Par ailleurs, on peut prévoir que :

- on focalise ledit dispositif de capture d'image sur le support ou sur la lentille ophtalmique à détourer disposée sur ce support, à distance du dispositif d'affichage ;
- à l'étape g), on compare ledit paramètre relatif à l'écart entre lesdites caractéristiques optiques mesurées pour une lentille droite et une lentille gauche destinées à ladite monture à une valeur seuil de tolérance et on détermine en fonction de cette comparaison un indicateur de conformité des lentilles ophtalmiques droite et gauche détourées.

L'invention propose également un dispositif de vérification d'au moins un contour et une caractéristique optique d'une lentille ophtalmique détourée conforme à l'une des revendications 11 à 14.

En outre, le motif défilant affiché par les moyens d'affichage présentant une période spatiale prédéterminée, les moyens de synchronisation sont programmés pour déclencher un nombre m de captures d'image, chaque capture d'image de ladite pluralité d'images par le dispositif de capture d'image correspondant à l'affichage du motif défilant décalé d'une distance égale à 1/m fois la période spatiale de ce motif par rapport à la capture précédente.

DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention, qui est définie dans les revendications annexées, et comment elle peut être réalisée.

Sur les dessins annexés :

- la figure 1 est une vue schématique d'un dispositif de vérification selon l'invention,
- la figure 2 est une vue schématique du contour mesuré et de caractéristiques optiques mesurées d'une lentille ophtalmique détourée superposés au contour souhaité et aux caractéristiques optiques souhaitées pour cette lentille ophtalmique détourée,
- les figures 3 à 7 sont cinq vues schématiques d'un motif défilant vu à travers la lentille ophtalmique détourée, ce motif défilant étant décalé d'une distance égale à 1/5 fois la période spatiale de ce motif entre chaque figure successive, selon la direction de cette période spatiale, le motif étant ici une ligne verticale,
- les figures 8 à 12 sont cinq vues schématiques d'un autre motif défilant vu à travers la lentille ophtalmique détourée, ce motif défilant étant décalé d'une distance égale à 1/5 fois la période spatiale de ce motif entre chaque figure successive, selon la direction de cette période spatiale, le motif étant ici une ligne horizontale,
- la figure 13 est une vue schématique de l'image obtenue par traitement statistique des images 3 à 7 et/ou 8 à 12.

Dispositif

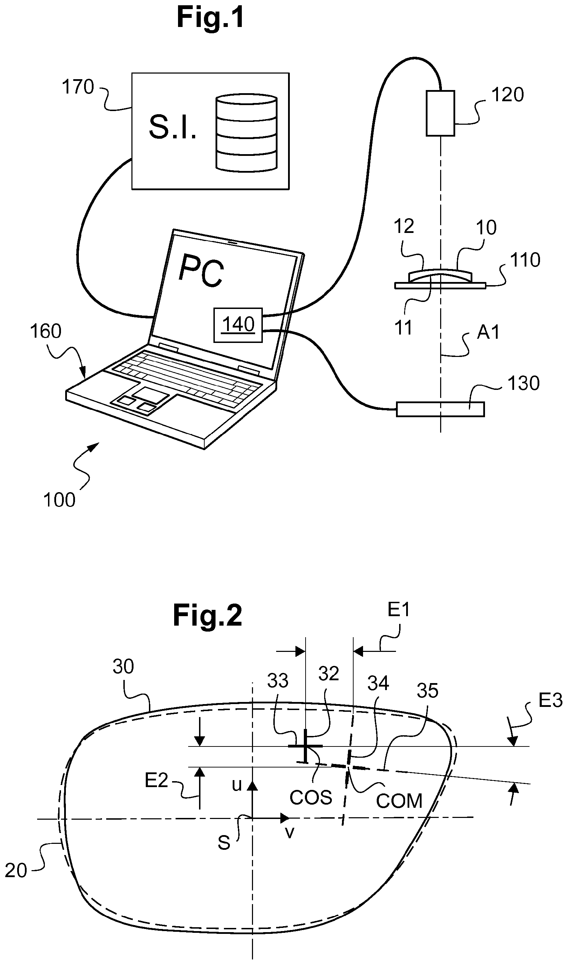

Sur la figure 1, on a représenté un dispositif 100 de vérification d'au moins une caractéristique géométrique et/ou optique d'une lentille ophtalmique détourée 10 selon l'invention. Ce dispositif 100 de vérification est adapté à mettre en œuvre le procédé de vérification selon l'invention.

Comme le montre la figure 1, ce dispositif 100 de vérification comprend :

- un support 110 pour ladite lentille détourée 10,
- d'un côté de ce support 110, un dispositif de capture d'image 120,
- de l'autre côté de ce support 110, un dispositif d'affichage 130 adapté à afficher au moins un motif défilant 150, 250 et à faire défiler ce motif selon au moins une direction de défilement prédéterminée par rapport audit support 110,
- des moyens de synchronisation 140 d'une pluralité de captures d'images par le dispositif de capture d'image 120 et du défilement du motif défilant 150, 250 réalisé par le dispositif d'affichage 130,
- des moyens de détermination de ladite caractéristique géométrique et/ou optique mesurée de la lentille détourée 10 en fonction de la pluralité de captures d'image réalisée et de comparaison de cette caractéristique géométrique et/ou optique mesurée avec une caractéristique géométrique et/ou optique souhaitée correspondante.

Plus précisément, ici, le support 110 comprend une plaque en matériau transparent, par exemple en verre ou en matériau plastique transparent.

Le support 110 est ici destiné à recevoir la lentille ophtalmique détourée seule.

La lentille détourée 10 est par exemple posée directement sur cette plaque, avec sa face arrière 11 orientée vers le support 110 et sa face avant 12 orientée vers le dispositif de capture d'image 120.

En variante, le support est destiné à recevoir la lentille ophtalmique détourée sur laquelle est fixé un pion de blocage.

On peut en effet prévoir que le support comprenne également un pion de blocage fixé sur la face avant de la lentille détourée et que la plaque comprend des moyens de réception de ce pion de blocage. Le pion de blocage est de préférence le pion utilisé pour bloquer la lentille pendant son détourage. La lentille ophtalmique détourée est alors orientée avec sa face avant vers le support et sa face arrière vers le dispositif de capture d'image

Ainsi, avantageusement, la lentille détourée est replacée dans le référentiel utilisé pour le détourage. En outre, de cette façon, les images de la lentille détourée capturée ultérieurement ne subissent pas de déformation due à une inclinaison non souhaitée du plan moyen de détourage de la lentille par rapport au plan de capture d'image.

En variante encore, le support est destiné à recevoir la lentille ophtalmique détourée montée dans une monture de lunettes.

On peut alors envisager que la lentille détourée soit montée dans la monture choisie par le porteur et que le support comprenne des moyens de fixation de la paire de lunettes comprenant cette monture et les lentilles détourées montées dans cette monture.

Les vérifications peuvent alors avantageusement être réalisées sur la lentille en situation dans la monture de lunettes.

Le support peut également être prévu pour accueillir simultanément les deux lentilles détourées pour une même monture. Le champ du dispositif de capture d'image doit alors être suffisant pour capturer simultanément une image des deux lentilles détourées posées sur le support.

Le support 110 est de préférence muni d'un repère d'échelle permettant de déduire le facteur d'échelle des images à partir de l'image de ce repère d'échelle identifiée sur une image capturée par le dispositif de capture d'image.

Le dispositif de capture d'image 120 est par exemple un appareil photo numérique ou une caméra numérique.

Ce dispositif de capture d'image 120 est disposé du côté du support 110 qui accueille la lentille détourée 10.

Une lentille ou un système optique peut être prévu entre le dispositif de capture d'image et la lentille détourée 10 supportée par le support 110 de manière à rendre le dispositif 100 télécentrique. L'image capturée par le dispositif de capture d'image dépend alors peu de la hauteur de la lentille détourée 10 par rapport au support 110.

Le dispositif d'affichage 130 comprend par exemple un écran adapté à afficher ledit motif défilant 150, 250. Il s'agit de préférence d'un écran numérique.

Ainsi, le dispositif d'affichage 130 est par exemple un écran LCD rétroéclairé qui joue en outre le rôle de source lumineuse du dispositif 100. Cet écran LCD est alors adapté à faire défiler ce motif défilant 150, 250 selon ladite direction de défilement prédéterminée par rapport audit support 110.

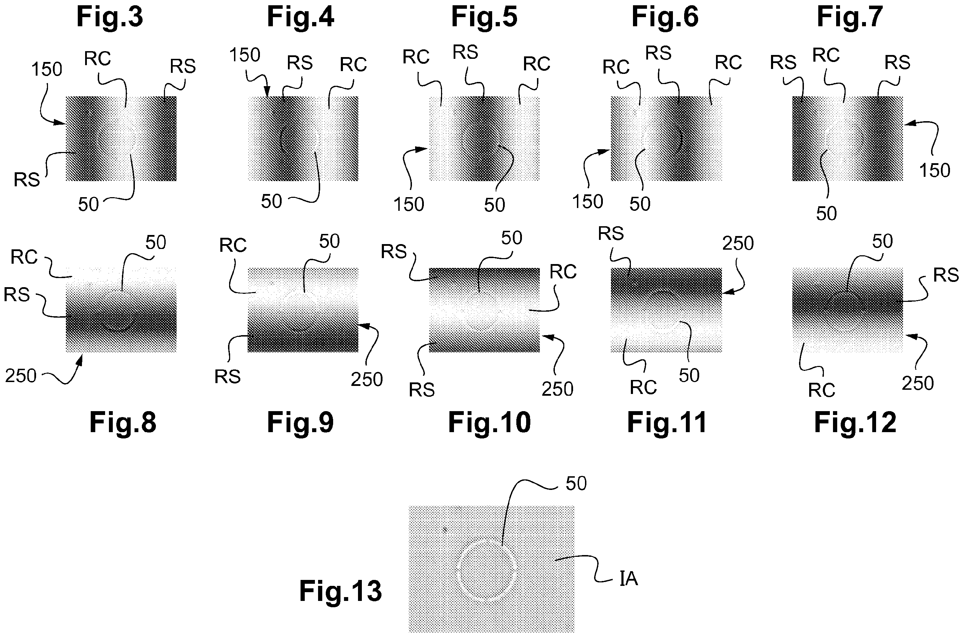

Le motif défilant 150, 250 comprend par exemple au moins une bande sombre RS entourée par deux bandes plus claires RC ou une bande claire RC entourée par deux bandes plus sombres RS. Il comprend de préférence une pluralité de bandes sombres RS et claires RC alternées (voir figures 3 à 12). Chaque bande s'étend selon un axe longitudinal.

Les bandes claires et sombres affichées sur l'écran numérique sont de préférence des bandes blanches et noires. En d'autres termes, les bandes claires présentent une luminosité d'affichage uniforme proche de 255 et les bandes sombres présentent une luminosité d'affichage uniforme proche de 0, en valeur RGB. Elles présentent de préférence des largeurs identiques. Elles présentent également de préférence des bords sensiblement droits et parallèles.

Le dispositif de capture d'image 120 étant focalisé sur le support 110 ou sur la lentille détourée 10 posée dessus, à distance de l'écran d'affichage 130, les bandes noires et blanches du motif sont floues et le motif défilant 150, 250 vu à travers la lentille détourée 10 présente alors une variation continue de luminosité.

Plus précisément, le dispositif 100 est agencé de préférence de telle sorte que la variation de luminosité du motif défilant varie continûment du blanc au noir avec une variation sensiblement sinusoïdale.

En d'autres termes, sur l'image capturée par le dispositif de capture d'image 120, le motif défilant 150, 250 présente une luminosité qui varie continûment entre deux valeurs extrêmes de manière sensiblement sinusoïdales, les deux valeurs extrêmes étant proches de 0 pour l'une et de 255 pour l'autre en valeurs RGB.

Sur les figures 3 à 7, on a représenté un premier type de motif défilant 150, comprenant des bandes noires et blanches alternées s'étendant selon un axe vertical dans le plan de capture d'image.

Sur les figures 8 à 12, on a représenté un deuxième type de motif défilant 250, comprenant des bandes noires et blanches alternées s'étendant selon un axe horizontal dans le plan de capture d'image, c'est-à-dire selon une direction orthogonale à la direction des bandes du premier type de motif défilant 150.

Quel que soit le motif défilant considéré, la direction de défilement selon laquelle le dispositif d'affichage 130 est adapté à faire défiler les bandes noires et blanches alternées est perpendiculaire à l'axe longitudinal selon lequel s'étendent les bandes.

En d'autres termes, les bandes verticales défilent horizontalement, et les bandes horizontales défilent verticalement, ce que montrent les figures 3 à 7 d'une part et 8 à 12 d'autre part.

Le dispositif d'affichage 130 est également de préférence adapté à afficher un ou plusieurs motifs fixes, par exemple une matrice de Hartmann.

De manière optionnelle, le dispositif 100 peut également comprendre un élément d'affichage additionnel d'un motif fixe, par exemple, une matrice de Hartmann. Il peut s'agir par exemple d'un écran LCD transparent non rétroéclairé.

Cet élément d'affichage additionnel est alors disposé entre le support 110 et le dispositif d'affichage 130.

Bien entendu, les différents éléments optiques de ce dispositif 100, à savoir, le dispositif de capture d'image 120, le support 110 et le dispositif d'affichage 130, ainsi que, le cas échéant, les éléments optiques optionnels tels que lentille ou système optique de télécentrage et élément d'affichage additionnel d'un motif fixe sont centrés sur un axe optique commun A1 (figure 1) du dispositif 100.

Le dispositif 100 comprend enfin des moyens électroniques et informatiques, ici sous la forme d'un ordinateur 160, programmés pour :

- déclencher la capture de chaque image de la lentille détourée en fonction du défilement du motif 150, 250 et
- déterminer les caractéristiques géométriques et/ou optiques de la lentille détourée 10 recherchée en fonction de la pluralité de captures d'image réalisée et de comparaison de cette caractéristique géométrique et/ou optique avec une caractéristique souhaitée correspondante.

L'ordinateur 160 comprend à cet effet notamment lesdits moyens de synchronisation 140 de la pluralité de captures d'images par le dispositif de capture d'image 120 et du défilement du motif 150, 250 réalisé par le dispositif d'affichage 130 lesdits moyens de détermination.

Lesdits moyens électroniques et informatiques comprennent en outre ici une base de données 170 (figure 1) auquel l'ordinateur 160 peut accéder afin de lire certaines informations ou de sauvegarder certains résultats.

Méthode

Ce dispositif 100 permet la mise en œuvre de la méthode de vérification du contour et d'une caractéristique optique d'une lentille ophtalmique détourée selon l'invention.

Cette méthode comprend les étapes suivantes :

a) on dispose la lentille ophtalmique détourée sur le support 110,

b) on capture au moins une image de cette lentille ophtalmique détourée à l'aide du dispositif de capture d'image 120,

c) on détermine, à partir de cette image, une caractéristique géométrique mesurée de ladite lentille ophtalmique détourée 10,

d) on détermine au moins une caractéristique optique mesurée de cette lentille ophtalmique détourée 10 dans un repère de l'image capturée à l'étape b),

e) on compare ladite caractéristique géométrique mesurée et la caractéristique optique mesurée à un modèle de lentille ophtalmique souhaité prédéterminé, comprenant au moins une caractéristique géométrique souhaitée et une caractéristique optique souhaitée correspondante.

En pratique, préalablement à la vérification de la lentille détourée 10, l'opérateur récupère les informations concernant la lentille souhaitée.

Plus précisément, par exemple, chaque lentille détourée 10 est associée à un identifiant permettant de consulter les caractéristiques géométriques et optiques souhaitées de la lentille détourée.

Cet identifiant est appelé « Job Ticket ». L'opérateur indique le numéro du Job Ticket à l'ordinateur 160, à l'aide du pavé numérique ou à l'aide d'une douchette en scannant un code barre du Job Ticket. Ce numéro permet à l'ordinateur d'accéder à un fichier associé à la lentille détourée 10 mis en mémoire dans la base de données 170 (figure 1).

Ce fichier contient les caractéristiques géométriques et optiques souhaitées pour la lentille détourée 10, notamment :

- un contour souhaité,
- des puissances souhaitées,
- des orientations souhaitées des axes,
- une position souhaitée du centre optique,
- une valeur souhaitée du demi-écart interpupillaire,
- une valeur souhaitée de la hauteur de la pupille par rapport au bord inférieur de la lentille détourée, c'est-à-dire de la hauteur du centre optique de la lentille détourée par rapport au bord inférieur de la lentille détourée.

On distinguera dans la suite trois différents types de lentilles détourées :

- les lentilles unifocales, présentant une même puissance sur toute leur surface,

- les lentilles bi ou trifocales, présentant un corps ayant une première puissance optique et une ou deux pastilles présentant des deuxième et / ou troisième puissances optiques différentes de la première,
- les lentilles progressives, présentant une puissance optique continûment variable entre une zone de vision de loin et une zone de vision de près.

Quel que soit le type de lentille détourée, les étapes a), b) et c) peuvent être réalisées de la même manière.

L'opérateur dispose la lentille détourée 10 à vérifier sur le support 110.

Il s'assure que la lentille détourée est sensiblement centrée sur le support 110 de manière à ce qu'elle soit dans le champ de capture d'image du dispositif de capture d'image 120.

L'opérateur déclenche la capture d'au moins une première image de cette lentille ophtalmique détourée 10.

Pour la capture de cette première image, l'écran LCD formant le dispositif d'affichage 130 est allumé mais n'affiche aucun motif. L'écran d'affichage présente alors une luminosité uniforme. Il est par exemple entièrement blanc.

L'image capturée est transférée à l'ordinateur 160 qui traite l'image de manière à déterminer, à partir de cette image, la ou les caractéristiques géométriques mesurées de la lentille détourée 10, par exemple un contour mesuré 20 de ladite lentille ophtalmique détourée 10, tel que défini par les revendications. Ce contour mesuré 20 est déterminé dans le plan de capture d'image.

En variante non-revendiquée, la caractéristique géométrique mesurée de la lentille détourée déterminée à l'étape c) peut être la position relative de deux ou trois points particuliers prédéterminés de la lentille détourée. Il peut également s'agir d'une ou plusieurs mesures de distances caractéristiques de cette lentille détourée.

A l'étape d), ladite caractéristique optique mesurée de cette lentille ophtalmique détourée 10 comprend au moins l'une des caractéristiques suivantes :

- position mesurée d'un centre optique mesuré,
- direction mesurée d'un axe optique mesuré,
- direction mesurée d'un dégradé de teinte de la lentille ophtalmique détourée 10,
- direction mesurée d'un axe de polarisation de la lentille ophtalmique détourée 10.

L'étape d) est réalisée de différentes manières selon le type de lentille détourée 10 considéré.

Lorsque la lentille détourée 10 est une lentille unifocale, dans un premier mode de réalisation de l'étape d), l'opérateur ou l'ordinateur 160 automatiquement déclenche au moins une deuxième capture d'image de la lentille détourée 10, en affichant derrière cette lentille détourée 10 par rapport au dispositif de capture d'image le motif fixe représentant par exemple la matrice de Hartmann.

Ainsi, à l'étape d), la deuxième image capturée grâce audit dispositif de capture d'image est l'image du motif fixe constitué par la matrice de Hartmann à travers la lentille ophtalmique détourée 10, et on détermine ladite caractéristique optique en fonction de cette deuxième image.

Cette matrice de Hartmann est une matrice de points dont les positions relatives sont connues dans le plan d'affichage de la matrice.

Cette matrice de Hartmann peut ici être affichée par le dispositif d'affichage 130. Elle constitue alors l'un des motifs que ce dispositif est adapté à afficher.

En pratique alors ici la matrice de Hartmann est affichée sur l'écran LCD du dispositif d'affichage 130.

En variante, la matrice de Hartmann peut également être affichée sur l'élément d'affichage additionnel mentionné précédemment.

Cette deuxième image est traitée par l'ordinateur 160 qui identifie les points de la matrice sur la deuxième image capturée et compare leurs positions relatives sur cette deuxième image à leurs positions relatives dans le plan d'affichage de la matrice.

Dans le cas où la matrice de Hartmann est affichée sur l'écran LCD du dispositif d'affichage 130, le traitement de l'image est adapté pour tenir compte de la défocalisation de cet écran.

L'ordinateur 160 est également programmé pour déterminer alors, en fonction de la déviation des points de la matrice Hartmann sur l'image de la matrice capturée à travers la lentille détourée par rapport à la position des points de cette matrice connue, le centre optique de la lentille détourée 10 et un axe optique de la lentille qui est en pratique ici l'axe du cylindre (s'il existe).

La position des points de cette matrice est par exemple déterminée à vide dans le dispositif 100 par une capture d'image réalisée sans aucune lentille disposée sur le support 110.

Ces caractéristiques optiques mesurées (position du centre optique, orientation de l'axe du cylindre) de la lentille ophtalmique détourée sont ainsi déterminées dans le repère de la deuxième image capturée, qui est identique au repère de la première image capturée à l'étape b).

Selon un deuxième mode de réalisation de l'étape d) dans le cas d'une lentille détourée unifocale, dans une étape d1) préalable à l'étape a), on place la lentille ophtalmique détourée dans un frontofocomètre et on appose sur ladite lentille ophtalmique détourée une marque indiquant le centre optique et/ou l'axe optique sur ladite lentille ophtalmique, et dans une étape d2) on identifie l'image de cette marque sur ladite première image capturée à l'étape b).

En pratique, le frontofocomètre permet d'apposer 3 points représentants le centre optique et la direction de l'axe du cylindre sur la face avant de la lentille détourée, qui sont facilement identifiables par traitement d'image.

Les caractéristiques optiques mesurées de la lentille ophtalmique détourée sont ici obtenues directement dans le repère de la première image capturée à l'étape b).

Lorsque la lentille détourée 10 est une lentille progressive, à l'étape d), on capture, grâce audit dispositif de capture d'image 120, une pluralité d'images du motif défilant 150, 250 affiché sur ledit dispositif d'affichage 130 à travers la lentille ophtalmique détourée 10 et on détermine ladite caractéristique optique en fonction de cette pluralité d'images.

Deux exemples de pluralités d'images capturées sont représentés respectivement sur les figures 3 à 7 et 8 à 12. Dans la suite on appellera la pluralité d'images représentées sur les figures 3 à 7 la première série d'images et la pluralité d'images représentées sur les figures 8 à 12 la deuxième série d'images. Chaque pluralité d'images comprend un nombre m d'images, ici 5 images.

De manière générale, le motif défilant 150, 250 affiché par les moyens d'affichage 130 présentent une période spatiale prédéterminée.

Dans les exemples de motifs défilant 150, 250 représentés sur les figures 3 à 7 et 8 à 12, le motif défilant 150, 250 comprend des bandes noires et blanches de même largeur alternées, comme décrit précédemment.

La période spatiale de chaque motif défilant 150, 250 est égale à la somme des largeurs d'une bande noire et une bande blanche, soit ici deux fois la largeur d'une bande.

Chaque capture d'image de ladite pluralité d'images comptant m images par le dispositif de capture d'image 130 correspond alors de préférence à l'affichage du motif défilant 150, 250 décalé d'une distance égale à 1/m fois la période spatiale de ce motif défilant 150, 250 par rapport à la capture précédente.

Dans les exemples représentés sur les figures 3 à 7 et 8 à 12, chacune des première et deuxième séries d'images comptent 5 images, chaque image correspond donc à l'affichage du motif défilant 150, 250 décalé de 1/5 fois la période spatiale de ce motif défilant 150, 250.

Lesdits moyens de synchronisation de l'ordinateur 160 sont programmés pour synchroniser la capture de chaque image de ladite pluralité d'images par le dispositif de capture d'image 120 et le défilement du motif défilant 150, 250 réalisé par le dispositif d'affichage 130 de manière à déclencher un nombre m de capture d'image, le motif défilant 150, 250 étant décalé d'une distance égale à 1/m fois la période spatiale de ce motif défilant 150, 250, selon la direction de défilement, entre deux captures d'images successives.

Une fois la capture des m images d'une série d'images effectuée, ces images sont transmises à l'ordinateur 160 qui est programmé pour effectuer un traitement statistique de ces images.

Plus précisément, à l'étape d), l'ordinateur 160 est ici programmé pour déterminer une image améliorée IA de ladite lentille ophtalmique détourée 10 par le traitement statistique de ladite pluralité d'images du motif défilant 150, 250 capturée.

En pratique, ici, ladite image améliorée IA est déterminée à partir du calcul de l'écart type de ladite pluralité d'images du motif défilant 150, 250.

En variante, ladite image améliorée peut être déterminée par d'autres calculs statistiques, comme par exemple le calcul de la variance de la pluralité d'images capturées ou le calcul du maximum ou du minimum de chaque pixel sur la pluralité d'images capturées.

Sur cette image améliorée IA, le motif défilant 150, 250 est invisible. Le traitement statistique a ainsi pour effet de faire disparaître le motif défilant 150, 250.

En outre, sur l'image améliorée IA, le contour des objets de phase tels que les microgravures à la surface ou dans le volume de la lentille détourée apparaissent clairement.

Ainsi, sur l'image améliorée, il est possible d'identifier précisément l'image des microgravures de la lentille détourée, qui indiquent de manière habituelle le centre optique ou le point référentiel prisme, usuellement noté PRP, et la direction des axes de cette lentille ophtalmique détourée.

La figure 13 montre par exemple l'une des microgravures 50 en forme de cercle permettant de déterminer la position du centre optique, ou du point référentiel prisme PRP, de la lentille détourée 10 sur l'image améliorée IA.

On constate que cette microgravure 50 est beaucoup plus visible sur l'image améliorée que sur les images capturées par le dispositif de capture d'image 120 représentées sur les figures 3 à 12.

L'ordinateur 160 est ainsi programmé pour identifier sur ladite image améliorée IA de ladite lentille ophtalmique détourée 10 au moins une desdites microgravures et pour en déduire la ou les caractéristiques optiques recherchées, notamment la position du centre optique mesurée et/ou la direction de l'axe du cylindre mesurée de la lentille détourée 10.

Lorsque la lentille détourée 10 est bi ou trifocale, elle possède des pastilles de puissance optique différente de celle du reste de la lentille.

On procède alors à l'étape d) comme pour la lentille progressive, en capturant au moins une pluralité d'images du motif défilant à travers la lentille détourée 10 de manière synchronisée avec le défilement, comme décrit précédemment. Le traitement statistique décrit précédemment est appliqué à cette pluralité d'images afin de déterminer l'image améliorée de la lentille détourée 10.

L'ordinateur 160 est alors programmé pour identifier, sur l'image améliorée obtenue, un contour de la ou des pastilles de puissance optique différente de celui du reste de la lentille ophtalmique de la lentille bi ou trifocale. La position de cette ou ces pastilles constitue alors la caractéristique optique déterminée à l'étape d).

En outre, de manière générale, il est possible d'identifier sur l'image améliorée IA le contour mesuré 20 de la lentille détourée 10 ou des défauts de revêtement de cette lentille détourée 10.

L'identification du contour mesuré 20 de la lentille détourée 10 sur l'image améliorée permet de compléter éventuellement la détermination de la caractéristique géométrique effectuée à l'étape b).

Dans le cas où le contour mesuré 20 a déjà été déterminé à l'étape c), cette identification sur l'image améliorée IA permet de confirmer et éventuellement préciser le contour mesuré déterminé à l'étape b). En effet, pour certaines lentilles détourées la détermination du contour de la lentille à partir de l'image capturée à l'étape b) est peu précise ou difficile. C'est le cas par exemple pour les lentilles ophtalmiques avec finition glace polie.

Dans le cas non-revendiqué où les caractéristiques géométriques déterminées à l'étape c) ne comprennent pas le contour mesuré 20, celui-ci est déterminé à partir de l'image améliorée.

On peut également envisager, en variante des étapes b) et c) décrites précédemment, que celles-ci soient réalisées avec l'étape d). Dans ce cas, aucune image sans motif affiché n'est capturée. A l'étape b), le dispositif de capture d'image capture les images du motif défilant. Lors de la mise en œuvre des étapes c) et d), l'image améliorée est déterminée à partir des images capturées, et les caractéristiques géométriques et optiques de la lentille détourée sont déterminées à partir de cette image. Notamment, l'image du contour mesuré de la lentille détourée est identifiée sur cette image améliorée et le contour mesuré en est déduit. Les caractéristiques optiques mesurées de la lentille détourée sont déterminées à partir de l'identification, sur l'image améliorée, des images des microgravures de la lentille détourée.

Quel que soit le type de lentille considérée, l'identification des défauts de revêtement permet de contrôler la qualité de la lentille détourée. En fonction de la position des défauts, centrale ou périphérique, l'ordinateur peut être programmé pour émettre un signal d'alerte indiquant que la lentille doit être refabriquée.

Quel que soit le type de lentille considérée, pour des lentilles ophtalmiques détourées teintées dégradées, en plus de l'axage de la prescription de la lentille, l'axage du dégradé de la teinte de la lentille ophtalmique peut également être déterminé. On détermine à cet effet l'axe de la direction de variation de luminosité sur l'image de la lentille enregistrée à l'étape b) ou à l'étape d).

De manière similaire, pour des lentilles ophtalmiques détourées polarisées, l'axage de la polarisation est également vérifié.

Cela peut être par exemple réalisé en utilisant la polarisation de l'écran LCD du dispositif d'affichage 130. La lentille détourée 10 est tournée sur ou avec le support 110 jusqu'à ce que l'intensité lumineuse traversant la lentille ophtalmique soit proche de zéro, ce qui signifie que l'axe de la polarisation de la lentille détourée est orthogonal à l'axe de la polarisation connu de l'écran LCD.

Le support de la lentille peut être motorisé pour faire tourner la lentille ou bien la lentille peut être tournée manuellement par l'opérateur. L'axe de la polarisation est déterminé en interpolant les mesures effectuées dans les différentes positions de la lentille détourée.

A l'étape e), il s'agit en pratique de contrôler la prescription du verre demi-écart interpupillaire, hauteur et axage (axe du cylindre, de la teinte dégradée et/ou de la polarisation) de la lentille détourée par rapport à la prescription du porteur. On détermine à cet effet les éventuelles erreurs de centrage et/ou d'axage de la lentille détourée 10.

Lors de l'étape c), les caractéristiques géométriques de la lentille détourée 10, ici son contour, ont été déterminées, et les caractéristiques optiques de cette lentille détourée ont été déterminées à l'étape d), dans le référentiel de l'image capturée par le dispositif de capture d'image.

Quel que soit le type de la lentille détourée 10, l'ordinateur est programmé pour comparer la caractéristique géométrique mesurée et la caractéristique optique mesurée de la lentille détourée à un modèle de lentille ophtalmique souhaitée prédéterminé, comprenant au moins une caractéristique géométrique souhaitée et une caractéristique optique souhaitée correspondant auxdites caractéristique géométrique mesurée et caractéristique optique mesurée.

Ce modèle représente la lentille souhaitée.

Ledit modèle de lentille ophtalmique souhaitée est déterminé en fonction des caractéristiques géométriques et optiques souhaitées pour la lentille détourée 10 contenue dans le fichier auquel l'ordinateur 160 accède à partir du « Job Ticket ».

Ce modèle, dont un exemple est représenté sur la figure 2 en traits pleins, comprend par exemple le contour souhaité 30 pour la lentille, avec le centre optique souhaité COS à sa position souhaitée par rapport au contour souhaité 30, et l'orientation des axes 32, 33 optiques de la lentille souhaitée par rapport au contour souhaité 30.

Ce modèle comprend également, éventuellement, une direction souhaitée pour le dégradé de teinte de la lentille et/ou une direction souhaitée pour la polarisation de cette lentille détourée.

De manière générale, à l'étape e), l'ordinateur 160 est programmé pour faire correspondre la ou les caractéristiques géométriques mesurées avec leur caractéristique géométrique souhaitée correspondante. De cette manière, les lentilles détourée et souhaitée peuvent être positionnées l'une par rapport à l'autre de manière à être superposées au mieux.

Plus précisément, ici, à l'étape e), l'ordinateur 160 est programmé pour réaliser les sous-étapes suivantes :

    e1) superposer le contour mesuré au contour souhaité en minimisant l'écart entre ceux-ci,

    e2) déterminer l'écart entre la caractéristique optique mesurée et la caractéristique optique souhaitée en fonction de la superposition réalisée à l'étape e1).

L'étape e1) permet de remettre dans un même référentiel géométrique lié à la lentille détourée les caractéristiques optiques souhaitées et mesurées, ce qui est représenté sur la figure 2.

Un algorithme de superposition du contour souhaité 20 et du contour mesuré 30 est décrit ci-dessous.

Les contours souhaité 20 et mesuré 30 sont deux contours fermés en 2 dimensions constitués de n points de coordonnées (x, y) dans un repère associé à chaque contour souhaité 20 et mesuré 30, dont l'origine (0, 0) est situé à l'intérieur de ce contour.

Le but est de trouver les valeurs de translations Tx et Ty ainsi que de rotation Rz à appliquer au contour mesuré 30 pour que les erreurs entre le contour souhaité 20 et le contour mesuré 30 ayant subi ces translations et rotations soient les plus petites possibles.

L'ordinateur est programmé pour calculer le centre de gravité de chacun des deux contours, notés dans la suite Cdg1 et Cdg2.

Le centre de gravité du chaque contour souhaité 20 et mesuré 30 peut être calculé en prenant le barycentre des triangles formés par les n points dont le sommet commun est la coordonnée (0, 0) du point origine du repère associé au contour.

Chaque centre de gravité est alors déterminé selon la formule :

$$Cdg = \begin{cases} \dfrac{\sum_{i=1}^{n} \dfrac{(x_i + x_{i+1})}{3}.S_i}{\sum_{i=1}^{n} S_i} \\[4ex] \dfrac{\sum_{i=1}^{n} \dfrac{(y_i + y_{i+1})}{3}.S_i}{\sum_{i=1}^{n} S_i} \end{cases}$$

Avec :

$$S_i = \frac{\sqrt{x_i.y_{i+1} - y_i.x_{i+1}}}{2}$$

pour i = 1 à n.

L'ordinateur est ensuite programmé pour recalculer les contours souhaité et mesuré de la lentille dans un référentiel centré sur leur centre de gravité Cdg1, Cdg2 respectifs.

Il s'agit donc de retrancher aux coordonnées de chaque point des contours souhaité 30 et mesuré 20 les coordonnées du centre de gravité Cdg1, Cdg2 correspondant.

Il est alors possible de superposer les centres de gravité Cdg1, Cdg2 des deux contours souhaité et mesurés afin de superposer les deux contours souhaité et mesuré. Les valeurs des translations Tx et Ty peuvent être déduites de l'écart entre les coordonnées des deux centres de gravité déterminés.

Ensuite on procède de manière itérative avec un algorithme dont un exemple est donné ci-après pour déterminer la rotation à appliquer au contour mesuré 20 pour le superposer au contour souhaité 30.

Selon un exemple de cet algorithme, on quantifie l'écart entre le contour mesuré 20 et le contour souhaité 30 en sommant les distances entre les deux contours pour un nombre prédéterminé d'angles répartis autour du centre de gravité commun des deux contours.

Le nombre d'angle est lié à la résolution souhaitée, par exemple inférieur ou égal au nombre de points compris dans le contour correspondant. Il est également possible d'imposer un pas angulaire, par exemple égal à un dixième de degré d'angle, entre deux angles pour lesquels l'écart entre les contours est évalué et d'évaluer cet écart par interpolation entre les points des contours les plus proches des angles imposés correspondants.

L'écart entre le contour souhaité 30 et le contour mesuré 20 est ainsi déterminé pour différentes valeurs de l'angle de rotation transformant le contour mesuré 20, et comparé à une valeur seuil d'écart.

Lorsque l'écart calculé est inférieur à ladite valeur seuil d'écart, l'angle de rotation correspondant est retenu pour transformer le contour mesuré 20.

Plus précisément, on considère par exemple successivement les rotations ayant pour centre le centre de gravité Cdg1, Cdg2 commun des deux contours, et un angle de rotation Rz compris entre un valeur minimale et une valeur maximale, par exemple compris entre -Pi et Pi, avec un incrément d'angle de rotation qui prend des valeurs de plus en plus petites.

Cette valeur d'incrément est par exemple initialement égale à Pi/8. L'incrément pour l'itération suivante est diminué, par exemple divisé par deux ou par un entier supérieur.

Tant que la valeur de l'incrément reste supérieur à la précision souhaitée sur l'angle de rotation, l'ordinateur calcule pour chaque angle de rotation Rz égale à la valeur minimale de l'angle de rotation à laquelle on ajoute un nombre entier k de fois l'incrément d'angle, l'écart entre le contour souhaité et la transformée du contour mesuré par cette rotation.

Lorsque cet écart devient inférieur à la valeur seuil d'écart, la valeur de l'angle de rotation Rz est déterminée comme étant la valeur de l'angle de rotation testée lors de cette itération.

Il est également possible de prévoir que des itérations successives recherchent la valeur minimale de l'écart entre les deux contours, puis lors de l'itération suivante, recentre les valeurs maximale et minimale des angles de rotation testés sur la valeur de l'angle de rotation pour laquelle l'écart a été trouvé minimal. L'incrément pour l'itération suivante est diminué, par exemple divisé par deux ou par un entier supérieur.

Les contours souhaité 20 et mesuré 30 étant alors superposés au mieux, il est possible de déterminer l'écart entre le centre optique souhaité COS et le centre optique mesuré COM.

Ces écarts sont par exemple déterminés dans un référentiel boxing (S, U, V) correspondant au référentiel boxing du contour souhaité 30. Le centre S de ce référentiel est le centre géométrique du rectangle boxing dans lequel est inclus le contour souhaité 30, et est appelé centre boxing. Les axes de ce référentiel boxing sont parallèles aux côtés de ce rectangle.

L'écart entre le centre optique souhaité COS et le centre optique mesuré COM permet ainsi de déterminer l'erreur sur la demi distance interpupillaire E1 et l'erreur sur la hauteur E2 du centre optique par rapport au bord inférieur de la lentille détourée (figure 2).

L'erreur sur la demi distance interpupillaire E1 est la coordonnée selon l'axe U parallèle au plus petit côté du rectangle boxing et l'erreur sur la hauteur E2 du centre optique par rapport au bord inférieur de la lentille détourée est la coordonnée selon l'axe V parallèle au plus grand côté du rectangle boxing (figure 2).

L'écart angulaire entre l'axe 32, 33 de la lentille souhaitée et l'axe 34, 35 de la lentille mesurés donne accès à une erreur d'axage E3 de la lentille détourée (figure 2).

De manière similaire, l'ordinateur 160 compare l'axe de la direction de variation de luminosité mesuré à l'axe souhaité pour la variation de luminosité. L'erreur d'axage sur la teinte dégradée peut être déterminée comme la différence entre l'axe de la direction de variation de luminosité mesuré et l'axe souhaité.

Pour des lentilles ophtalmiques détourées polarisées, l'ordinateur 160 compare la direction de l'axe de la polarisation mesurée à la direction de l'axe souhaitée pour la polarisation de la lentille détourée 10. L'erreur d'axage sur la polarisation peut être déterminée comme l'angle entre la direction de l'axe de la polarisation mesurée et la direction de l'axe de la polarisation souhaitée.

Ainsi, dans une étape f), l'ordinateur 160 détermine, en fonction de la comparaison réalisée à l'étape e), un paramètre relatif à l'écart entre ledit contour mesuré et ledit contour souhaité ainsi qu'un paramètre relatif à l'écart entre ladite caractéristique optique mesurée et ladite caractéristique optique souhaitée.

Ce paramètre relatif à l'écart entre ladite caractéristique optique mesurée et ladite caractéristique optique souhaitée est ici par exemple la valeur de l'erreur déterminée entre chaque caractéristique optique mesurée et la caractéristique optique souhaitée correspondante.

Le paramètre relatif à l'écart entre ledit contour mesuré 20 et ledit contour souhaité 30 est par exemple la somme des distances entre les points du contour mesuré 20 et du contour souhaité 30 lorsque les deux contours sont superposés.

A l'étape f), l'ordinateur 160 est alors programmé pour comparer ledit paramètre relatif à l'écart entre ledit contour mesuré 20 et ledit contour souhaité 30 et chaque paramètre relatif à l'écart entre ladite caractéristique optique mesurée et ladite caractéristique optique souhaitée à des valeurs seuil de tolérance et détermine en fonction de cette comparaison un indicateur de conformité de la lentille ophtalmique détourée 10.

En pratique ici, l'ordinateur est alors programmé pour comparer les erreurs à des valeurs maximales d'erreur tolérées. Le paramètre relatif à l'écart entre le contour souhaité et le contour mesuré est comparé à une valeur seuil maximale tolérée pour ce paramètre.

L'indicateur de conformité de la lentille détourée 10 par rapport aux caractéristiques optiques souhaitées en est déduite.

Lorsque les erreurs déterminées et le paramètre relatif à l'écart entre le contour souhaité 20 et le contour mesuré 30 sont inférieurs aux valeurs maximales d'erreur et valeur seuil maximale tolérée mentionnées précédemment, la lentille détourée correspondante est déclarée conforme à la lentille souhaitée. L'indicateur indique que la lentille détourée est conforme.

Les valeurs maximales d'erreur tolérées peuvent avantageusement être modulées en fonction des caractéristiques optiques souhaitées de la lentille et des normes des pays dans lequel la paire de lunettes sera utilisée.

De préférence, la détermination de la conformité de chaque lentille est effectuée de manière indépendante pour la lentille droite et la lentille gauche destinées à une même monture.

Alors, dans une étape g), l'ordinateur 160 détermine, en fonction de la comparaison réalisée à l'étape e), un paramètre relatif à l'écart entre lesdites caractéristiques optiques mesurées pour une lentille droite et une lentille gauche destinées à ladite monture.

L'ordinateur 160 compare ensuite ledit paramètre relatif à l'écart entre lesdites caractéristiques optiques mesurées pour une lentille droite et une lentille gauche destinées à ladite monture à une valeur seuil de tolérance et on détermine en fonction de cette comparaison un indicateur de conformité des lentilles ophtalmiques droite et gauche détourées.

On détermine donc ici les erreurs décrites précédemment pour chacune des deux lentilles droite et gauche destinées à être montées dans une même monture, puis on compare ces erreurs entre elles.

La différence entre les erreurs déterminées pour les lentilles droite et gauche est comparée à la valeur seuil de tolérance correspondante. L'indicateur de conformité indique que les lentilles droite et gauche sont conformes l'une par rapport à l'autre si la différence entre ces erreurs reste inférieure à la valeur seuil de tolérance correspondante.

Avantageusement, on peut également déduire de ce qui précède des erreurs globales correspondantes, lorsque les deux lentilles détourées droite et gauche sont utilisées dans la monture associée. On détermine par exemple une erreur sur l'écart pupillaire total, une différence de hauteur entre les lentilles détourées droite et gauche, un écart d'axage entre la lentille détourée droite et la lentille détourée gauche.

Lorsque les erreurs déterminées et le paramètre relatif à l'écart entre le contour souhaité 20 et le contour mesuré 30 sont supérieurs aux valeurs maximales d'erreur et valeur seuil maximale tolérée mentionnées précédemment, la lentille détourée 10 correspondante est déclarée non conforme à la lentille souhaitée. L'indicateur indique que la lentille détourée est non conforme.

Les résultats, erreur et conformité de la lentille, peuvent être enregistrés dans la base de données 170 pour archivage et/ou analyse.

Dans le cas où la lentille détourée 10 est déclarée non conforme, le dispositif 100 peut par exemple relancer un ordre de fabrication de cette lentille détourée.

Dans le cas où la lentille détourée 10 est déclarée conforme, elle est par exemple expédiée au client accompagné d'un certificat de contrôle qualité.

En cas de retour d'une lentille détourée par un client non satisfait, celle-ci est vérifiée par le dispositif 100 et les résultats de ce contrôle sont comparés à ceux obtenus avant l'envoi des lentilles détourées au client.

La vérification par le dispositif 100 et la méthode décrite ici d'une lentille détourée 10 prédéterminée identique fabriquée à intervalles réguliers sur une ligne de production permet en outre de vérifier que les outils de détourage, en amont du dispositif de vérification, ne présentent pas de défaut ou d'usure.

Si l'on utilise un dispositif 100 muni d'un support adapté à fixer la monture munie de ses deux lentilles ophtalmiques, il est possible de vérifier également directement la distance interpupillaire, les hauteurs des centres optiques par rapport au bord inférieur de la lentille correspondante, et les axes des lentilles ophtalmiques détourées montées dans la monture.

Ici, nous avons décrit le cas où les contours mesurés et souhaités sont positionnés l'un par rapport à l'autre en minimisant l'écart entre les deux contours, puis l'écart entre les caractéristiques optiques est quantifié sur la base de ce positionnement relatif des contours mesuré et souhaité. En variante, on peut envisager que les contours mesuré et souhaité de la lentille détourée sont positionnés l'un par rapport à l'autre en minimisant l'écart entre les caractéristiques optiques mesurées et souhaitées, par exemple en minimisant la distance entre le centre optique mesuré et souhaité et en minimisant l'écart angulaire entre l'axe du cylindre mesuré et souhaité. L'écart entre les contours mesuré et souhaité est alors quantifié sur la base de ce positionnement relatif.

**Revendications**

1. Méthode de vérification d'au moins un contour et d'une caractéristique optique d'une lentille ophtalmique détourée (10) comprenant les étapes suivantes :

a) on dispose la lentille ophtalmique détourée (10) sur un support (110), disposé entre un appareil de capture d'image (120) adapté à capturer l'image de cette lentille ophtalmique à l'étape b), et un dispositif d'affichage (130) d'un motif défilant (150, 250),

b) on capture au moins une image de cette lentille ophtalmique détourée (10),

c) on détermine, à partir de cette image, un contour mesuré (20) de ladite lentille ophtalmique détourée (10),

d) on capture, grâce audit dispositif de capture d'image (120), une pluralité d'images de ce motif défilant (150, 250) à travers la lentille ophtalmique détourée (10), de manière synchronisée avec le défilement du motif défilant (150, 250), et on détermine, en fonction de cette pluralité d'images, au moins une caractéristique optique mesurée de cette lentille ophtalmique détourée (10) dans un repère de l'image capturée à l'étape b),

e) on compare ledit contour mesuré associée à la caractéristique optique mesurée à un modèle de lentille ophtalmique souhaité prédéterminé, comprenant au moins un contour souhaité (30) correspondant et une caractéristique optique souhaitée correspondante.

**2.** Méthode selon la revendication 1, selon laquelle, à l'étape d), ladite caractéristique optique comprenant la position du centre optique (COM) et/ou la direction d'un axe optique (34, 35) de la lentille ophtalmique détourée (10), on réalise les sous-étapes suivantes :

d1) préalablement à l'étape a), on place la lentille ophtalmique détourée (10) dans un frontofocomètre et on appose sur ladite lentille ophtalmique détourée (10) une marque indiquant le centre optique et/ou la direction dudit axe optique sur ladite lentille ophtalmique détourée (10),

d2) on identifie l'image de cette marque sur l'image capturée à l'étape b).

**3.** Méthode selon l'une des revendications 1 à 2, selon laquelle, à l'étape d), le motif défilant (150, 250) affiché par les moyens d'affichage (130) présentant une période spatiale prédéterminée et ladite pluralité d'images comprenant un nombre m d'images, chaque capture d'image de ladite pluralité d'images par le dispositif de capture d'image (120) correspond à l'affichage du motif défilant (150, 250) décalé d'une distance égale à 1/m fois la période spatiale de ce motif défilant (150, 250) par rapport à la capture précédente.

**4.** Méthode selon l'une des revendications 1 à 3, selon laquelle, à l'étape d), on détermine une image améliorée (IA) de ladite lentille ophtalmique détourée (10) par un traitement statistique de ladite pluralité d'images du motif défilant (150, 250) à travers la lentille ophtalmique détourée (10).

**5.** Méthode selon la revendication 4, selon laquelle, à l'étape d), on identifie, sur ladite image améliorée (IA) de ladite lentille ophtalmique détourée (10), l'image d'au moins l'un des éléments suivants :

- des gravures (50) réalisées à la surface de la lentille ophtalmique détourée (10) ou dans le volume de la lentille ophtalmique détourée (10),
- un contour mesuré (20) de la lentille ophtalmique détourée (10),
- un contour d'une pastille de puissance optique différente de celui du reste de la lentille ophtalmique détourée (10),
- des défauts de revêtement de la lentille ophtalmique détourée (10).

**6.** Méthode selon l'une des revendications précédentes, selon laquelle, on réalise les sous-étapes suivantes :

e1) on superpose le contour mesuré (20) au contour souhaité (30) en minimisant l'écart entre ceux-ci,

e2) on détermine l'écart entre la caractéristique optique mesurée et la caractéristique optique souhaitée en fonction de la superposition réalisée à l'étape e1).

**7.** Méthode selon l'une des revendications précédentes, selon laquelle, à l'étape d), ladite caractéristique optique mesurée de cette lentille ophtalmique détourée (10) comprend au moins l'une des caractéristiques suivantes :

- position d'un centre optique mesuré (COM),
- direction d'un axe optique mesuré (34, 35),
- direction mesurée d'un dégradé de teinte de la lentille ophtalmique détourée (10),
- direction mesurée d'un axe de polarisation de la lentille ophtalmique détourée (10).

**8.** Méthode selon l'une des revendications précédentes, selon laquelle dans une étape f), on détermine, en fonction de la comparaison réalisée à l'étape e), un paramètre relatif à l'écart entre le contour mesuré et le contour souhaité ainsi qu'un paramètre relatif à l'écart entre ladite caractéristique optique mesurée et ladite caractéristique optique souhaitée.

**9.** Méthode selon la revendication précédente, selon laquelle à l'étape f), on compare ledit paramètre relatif à l'écart entre le contour mesuré et le contour souhaité et ledit paramètre relatif à l'écart entre ladite caractéristique optique mesurée et ladite caractéristique optique souhaitée à des valeurs seuil de tolérance et on détermine en fonction de cette comparaison un indicateur de conformité de la lentille ophtalmique détourée (10).

10. Méthode selon l'une des revendications précédentes, selon laquelle dans une étape g), on détermine, en fonction de la comparaison réalisée à l'étape e), un paramètre relatif à l'écart entre lesdites caractéristiques optiques mesurées pour une lentille droite et une lentille gauche destinées à une monture.

11. Dispositif de vérification d'au moins un contour et une caractéristique optique d'une lentille ophtalmique détourée (10) comprenant :

   - un support (110) pour ladite lentille détourée (10),
   - d'un côté de ce support (110), un dispositif de capture d'image (120),
   - de l'autre côté de ce support (110), un dispositif d'affichage (130) adapté à afficher au moins un motif défilant (150, 250) et à faire défiler ce motif défilant (150, 250) selon au moins une direction de défilement prédéterminée par rapport audit support (110),
   - des moyens de synchronisation (140) d'une pluralité de captures d'images par le dispositif de capture d'image (120) et du défilement du motif défilant (150, 250) réalisé par le dispositif d'affichage (130),
   - des moyens de détermination du contour et de la caractéristique optique de la lentille ophtalmique détourée (10) en fonction de la pluralité de captures d'image réalisée et de comparaison de ce contour et de cette caractéristique optique avec un contour souhaité et une caractéristique optique souhaitée correspondante
   - un ordinateur (160) programmé pour déterminer, en fonction de la comparaison réalisée par lesdits moyens de comparaison, un paramètre relatif à l'écart entre ledit contour mesuré et ledit contour souhaité ainsi qu'un paramètre relatif à l'écart entre ladite caractéristique optique mesurée et ladite caractéristique optique souhaitée.

12. Dispositif selon la revendication précédente, dans lequel ledit motif défilant (150, 250) comprend des bandes noires et blanches alternées et dans lequel le dispositif de capture d'images (120) est focalisé à proximité du support (110), à distance dudit motif défilant (150, 250).

13. Dispositif selon la revendication 12, dans lequel la variation de luminosité du motif défilant (150, 250) vu à travers la lentille détourée (10) varie continument du blanc au noir avec une variation sensiblement sinusoïdale.

14. Dispositif selon l'une des revendications 11 à 13, dans lequel l'ordinateur (160) est programmé pour réaliser les sous-étapes suivantes :

   e1) superposer le contour mesuré au contour souhaité en minimisant l'écart entre ceux-ci,
   e2) déterminer l'écart entre la caractéristique optique mesurée et la caractéristique optique souhaitée en fonction de la superposition réalisée à l'étape e1).

**Patentansprüche**

1. Verfahren zur Überprüfung mindestens einer Kontur und einer optischen Eigenschaft eines abgekanteten Brillenglases (10), das die folgenden Schritte beinhaltet:

   a) Anordnen des abgekanteten Brillenglases (10) auf einem Träger (110), der zwischen einer Bilderfassungseinrichtung (120), die dazu angepasst ist, das Bild dieses Brillenglases in Schritt b) zu erfassen, und einer Vorrichtung zum Wiedergeben (130) eines vorbeiziehenden Musters (150, 250) angeordnet ist,
   b) Erfassen mindestens eines Bildes dieses abgekanteten Brillenglases (10),
   c) Bestimmen, anhand dieses Bildes, einer gemessenen Kontur (20) des abgekanteten Brillenglases (10),
   d) Erfassen, mit Hilfe der Bilderfassungsvorrichtung (120), einer Vielzahl von Bildern dieses vorbeiziehenden Musters (150, 250) durch das abgekantete Brillenglas (10) auf eine mit dem Vorbeiziehen des vorbeiziehenden Musters (150, 250) synchronisierte Weise und Bestimmen, in Abhängigkeit von dieser Vielzahl von Bildern, mindestens einer gemessenen optischen Eigenschaft dieses abgekanteten Brillenglases (10) in einem Koordinatensystem des in Schritt b) erfassten Bildes,
   e) Vergleichen der mit der gemessenen optischen Eigenschaft assoziierten gemessenen Kontur mit einem vorgegebenen gewünschten Brillenglasmodell, das mindestens eine entsprechende gewünschte Kontur (30) und eine entsprechende gewünschte optische Eigenschaft beinhaltet.

2. Verfahren nach Anspruch 1, wobei in Schritt d), während die optische Eigenschaft die Position des optischen Mittelpunkts (COM) und/oder die Richtung einer optischen Achse (34, 35) des abgekanteten Brillenglases (10) beinhaltet, die folgenden Unterschritte durchgeführt werden:

> d1) vor dem Schritt a), Einsetzen des abgekanteten Brillenglases (10) in einen Scheitelbrechwertmesser und Anbringen einer Markierung auf dem abgekanteten Brillenglas (10), die den optischen Mittelpunkt und/oder die Richtung der optischen Achse auf dem abgekanteten Brillenglas (10) anzeigt,
> d2) Identifizieren des Bildes dieser Markierung auf dem in Schritt b) erfassten Bild.

3. Verfahren nach einem der Ansprüche 1 bis 2, wobei in Schritt d), während das durch die Wiedergabemittel (130) wiedergegebene vorbeiziehende Muster (150, 250) eine vorgegebene räumliche Periode aufweist und die Vielzahl von Bildern eine Anzahl m Bilder beinhaltet, jede Bilderfassung der Vielzahl von Bildern durch die Bilderfassungsvorrichtung (120) der Wiedergabe des vorbeiziehenden Musters (150, 250) versetzt um einen Abstand gleich dem 1/m-fachen der räumlichen Periode dieses vorbeiziehenden Musters (150, 250) mit Bezug auf die vorhergehende Erfassung entspricht.

4. Verfahren nach einem der Ansprüche 1 bis 3, wobei in Schritt d) durch eine statistische Verarbeitung der Vielzahl von Bildern des vorbeiziehenden Musters (150, 250) durch das abgekantete Brillenglas (10) ein verbessertes Bild (IA) des abgekanteten Brillenglases (10) bestimmt wird.

5. Verfahren nach Anspruch 4, wobei in Schritt d) auf dem verbesserten Bild (IA) des abgekanteten Brillenglases (10) das Bild mindestens eines der folgenden Elemente identifiziert wird:

> - Gravuren (50), die an der Oberfläche des abgekanteten Brillenglases (10) oder in die Masse des abgekanteten Brillenglases (10) eingebracht sind,
> - eine gemessene Kontur (20) des abgekanteten Brillenglases (10),
> - eine Kontur eines Segments mit einer optischen Leistung, die sich von der Kontur des restlichen abgekanteten Brillenglases (10) unterscheidet,
> - Beschichtungsfehler des abgekanteten Brillenglases (10) .

6. Verfahren nach einem der vorhergehenden Ansprüche, wobei die folgenden Unterschritte durchgeführt werden:

> e1) Legen der gemessenen Kontur (20) über die gewünschte Kontur (30), wobei die Abweichung zwischen ihnen minimiert wird,
e2) Bestimmen der Abweichung zwischen der gemessenen optischen Eigenschaft und der gewünschten optischen Eigenschaft in Abhängigkeit von dem in Schritt e1) durchgeführten Übereinanderlegen.

7. Verfahren nach einem der vorhergehenden Ansprüche, wobei in Schritt d) die gemessene optische Eigenschaft dieses abgekanteten Brillenglases (10) mindestens eine der folgenden Eigenschaften beinhaltet:

> - Position eines gemessenen optischen Mittelpunkts (COM),
> - Richtung einer gemessenen optischen Achse (34, 35),
> - gemessene Richtung eines Farbverlaufs des abgekanteten Brillenglases (10),
> - gemessene Richtung einer Polarisationsachse des abgekanteten Brillenglases (10).

8. Verfahren nach einem der vorhergehenden Ansprüche, wobei in einem Schritt f) in Abhängigkeit von dem in Schritt e) durchgeführten Vergleich ein Parameter bezüglich der Abweichung zwischen der gemessenen Kontur und der gewünschten Kontur sowie ein Parameter bezüglich der Abweichung zwischen der gemessenen optischen Eigenschaft und der gewünschten optischen Eigenschaft bestimmt wird.

9. Verfahren nach dem vorhergehenden Anspruch, wobei in Schritt f) der Parameter bezüglich der Abweichung zwischen der gemessenen Kontur und der gewünschten Kontur und der Parameter bezüglich der Abweichung zwischen der gemessenen optischen Eigenschaft und der gewünschten optischen Eigenschaft mit Toleranzschwellenwerten verglichen werden und in Abhängigkeit von diesem Vergleich ein Konformitätsindikator des abgekanteten Brillenglases (10) bestimmt wird.

10. Verfahren nach einem der vorhergehenden Ansprüche, wobei in einem Schritt g) in Abhängigkeit von dem in Schritt e) durchgeführten Vergleich ein Parameter bezüglich der Abweichung zwischen den gemessenen optischen Eigenschaften für ein rechtes Glas und ein linkes Glas, die für ein Gestell zweckbestimmt sind, bestimmt wird.

11. Vorrichtung zur Überprüfung mindestens einer Kontur und einer optischen Eigenschaft eines abgekanteten Brillenglases (10), die Folgendes beinhaltet:

> - einen Träger (110) für das abgekantete Brillenglas (10),
> - auf einer Seite dieses Trägers (110), eine Bilderfassungsvorrichtung (120),

- auf der anderen Seite dieses Trägers (110), eine Wiedergabevorrichtung (130), die dazu ausgelegt ist, mindestens ein vorbeiziehendes Muster (150, 250) wiederzugeben und dieses vorbeiziehende Muster (150, 250) gemäß mindestens einer vorgegebenen Vorbeiziehrichtung mit Bezug auf den Träger (110) vorbeiziehen zu lassen,

- Mittel zum Synchronisieren (140) einer Vielzahl von Bilderfassungen durch die Bilderfassungsvorrichtung (120) und des durch die Wiedergabevorrichtung (130) durchgeführten Vorbeiziehens des vorbeiziehenden Musters (150, 250),

- Mittel zum Bestimmen der Kontur und der optischen Eigenschaft des abgekanteten Brillenglases (10) in Abhängigkeit von der Vielzahl von durchgeführten Bilderfassungen und zum Vergleichen dieser Kontur und dieser optischen Eigenschaft mit einer gewünschten Kontur und einer entsprechenden gewünschten optischen Eigenschaft,

- einen Rechner (160), der dazu programmiert ist, in Abhängigkeit von dem durch die Vergleichsmittel durchgeführten Vergleich einen Parameter bezüglich der Abweichung zwischen der gemessenen Kontur und der gewünschten Kontur sowie einen Parameter bezüglich der Abweichung zwischen der gemessenen optischen Eigenschaft und der gewünschten optischen Eigenschaft zu bestimmen.

12. Vorrichtung nach dem vorhergehenden Anspruch, wobei das vorbeiziehende Muster (150, 250) abwechselnde schwarze und weiße Streifen beinhaltet und wobei die Bilderfassungsvorrichtung (120) in der Nähe des Trägers (110) in einem Abstand von dem vorbeiziehenden Muster (150, 250) fokussiert ist.

13. Vorrichtung nach Anspruch 12, wobei sich die Änderung der Helligkeit des vorbeiziehenden Musters (150, 250), gesehen durch das abgekantete Glas (10), mit einer im Wesentlichen sinusförmigen Änderung kontinuierlich von weiß zu schwarz ändert.

14. Vorrichtung nach einem der Ansprüche 11 bis 13, wobei der Rechner (160) dazu programmiert ist, die folgenden Unterschritte durchzuführen:

e1) Legen der gemessenen Kontur über die gewünschte Kontur, wobei die Abweichung zwischen ihnen minimiert wird,

e2) Bestimmen der Abweichung zwischen der gemessenen optischen Eigenschaft und der gewünschten optischen Eigenschaft in Abhängigkeit von dem in Schritt e1) durchgeführten Übereinanderlegen.

**Claims**

1. Method for checking at least one outline and one optical characteristic of an edged ophthalmic lens (10) comprising the following steps:

a) the edged ophthalmic lens (10) is placed on a holder (110), placed between an image-capturing apparatus (120) suitable for capturing the image of this ophthalmic lens in step b), and a device (130) for displaying a scrolling pattern (150, 250),

b) at least one image of this edged ophthalmic lens (10) is captured,

c) on the basis of this image, a measured outline (20) of said edged ophthalmic lens (10) is determined,

d) a plurality of images of this scrolling pattern (150, 250) are captured, by virtue of said image-capturing device (120), through the edged ophthalmic lens (10), in a manner that is synchronized with the scrolling motion of the scrolling pattern (150, 250), and, depending on this plurality of images, at least one measured optical characteristic of this edged ophthalmic lens (10) in a coordinate system of the image captured in step b) is determined,

e) said measured outline associated with the measured optical characteristic is compared to a predetermined desired ophthalmic-lens model, comprising at least one corresponding desired outline and one corresponding desired optical characteristic.

2. Method according to Claim 1, wherein, in step d), said optical characteristic comprising the position of the optical centre (COM) and/or the direction of an optical axis (34, 35) of the edged ophthalmic lens (10), the following substeps are carried out:

d1) prior to step a), the edged ophthalmic lens (10) is placed in a lensmeter and a mark is made on said edged ophthalmic lens (10), said mark indicating the optical centre and/or the direction of said optical axis on said edged ophthalmic lens (10),

d2) the image of this mark is identified in the image captured in step b).

3. Method according to one of Claims 1 and 2, wherein, in step d), the scrolling pattern (150, 250) displayed by the displaying means (130) having a predetermined spatial period and said plurality of images comprising a number m of images, each capture of one image of said plurality of images by the image-capturing device (120) corresponds to the display of the scrolling pattern (150, 250) shifted by a distance equal to 1/m times the spatial period of this scrolling pattern (150, 250) with respect to the preceding capture.

4. Method according to one of Claims 1 to 3, wherein, in step d), an improved image (IA) of said edged ophthalmic lens (10) is determined by applying statistical processing to said plurality of images of the scrolling pattern (150, 250) through the edged ophthalmic lens (10).

5. Method according to Claim 4, wherein, in step d), in said improved image (IA) of said edged ophthalmic lens (10), the image of at least one of the following elements is identified:

   - engravings (50) produced on the surface of the edged ophthalmic lens (10) or in the volume of the edged ophthalmic lens (10),
   - a measured outline (20) of the edged ophthalmic lens (10),
   - an outline of a zone of different optical power to that of the rest of the edged ophthalmic lens (10),
   - defects in the coating (s) of the edged ophthalmic lens (10).

6. Method according to one of the preceding claims, wherein, the following substeps are carried out:

   e1) the measured outline (20) is superposed on the desired outline (30) by minimizing the discrepancy therebetween,
   e2) the discrepancy between the measured optical characteristic and the desired optical characteristic is determined depending on the superposition obtained in step e1).

7. Method according to one of the preceding claims, wherein, in step d), said measured optical characteristic of this edged ophthalmic lens (10) comprises at least one of the following characteristics:

   - position of a measured optical centre (COM),
   - direction of a measured optical axis (34, 35),
   - measured direction of a tint gradient of the edged ophthalmic lens (10),
   - measured direction of a polarization axis of the edged ophthalmic lens (10).

8. Method according to one of the preceding claims, wherein in a step f), depending on the comparison made in step e), a parameter relating to the discrepancy between the measured outline and the desired outline and a parameter relating to the discrepancy between said measured optical characteristic and said desired optical characteristic are determined.

9. Method according to the preceding claim, wherein in step f), said parameter relating to the discrepancy between the measured outline and the desired outline and said parameter relating to the discrepancy between said measured optical characteristic and said desired optical characteristic are compared to tolerance threshold values and, depending on this comparison, an indicator of the conformity of the edged ophthalmic lens (10) is determined.

10. Method according to one of the preceding claims, wherein in a step g), depending on the comparison made in step e), a parameter relating to the discrepancy between said measured optical characteristics is determined for a right lens and a left lens that are intended for a frame.

11. Device for checking at least one outline and one optical characteristic of an edged ophthalmic lens (10) comprising:

   - a holder (110) for said edged lens (10),
   - on one side of this holder (110), an image-capturing device (120),
   - on the other side of this holder (110), a displaying device (130) suitable for displaying at least one scrolling pattern (150, 250) and for making this scrolling pattern (150, 250) scroll in at least one predetermined scrolling direction with respect to said holder (110),
   - means (140) for synchronizing a plurality of captures of images by the image-capturing device (120) and the scrolling of the scrolling pattern (150, 250) performed by the displaying device (130),
   - means for determining the outline and the optical characteristic of the edged ophthalmic lens (10) depending on the plurality of captured images and for comparing this outline and this optical characteristic with a desired outline and a corresponding desired optical characteristic,
   - a computer (160) programmed to determine, depending on the comparison made by said comparing means, a parameter relating to the discrepancy between said measured outline and said desired outline and a parameter relating to the discrepancy between said measured optical characteristic and said desired optical characteristic.

12. Device according to the preceding claim, wherein said scrolling pattern (150, 250) comprises alternating black and white strips and wherein the image-capturing device (120) is focused in proximity to the holder (110), at a distance from said scrolling pattern (150, 250) .

13. Device according to Claim 12, wherein the variation in the brightness of the scrolling pattern (150, 250) seen through the edged lens (10) varies continuously from white to black with a substantially sinusoidal variation.

14. Device according to one of Claims 11 to 13, wherein the computer (160) is programmed to carry out the following substeps:

e1) superposing the measured outline on the desired outline by minimizing the discrepancy therebetween,

e2) determining the discrepancy between the measured optical characteristic and the desired optical characteristic depending on the superposition obtained in step e1).

# Fig.1

170    S.I.

PC

140

160

100

120

12   10

110

11

A1

130

# Fig.2

E1

30

33   32   34   35

E3

E2

u

COS   COM

S   v

20

**Fig.3** **Fig.4** **Fig.5** **Fig.6** **Fig.7**

150   RC   RS
RS
50

150   RS   RC
50

RC   RS   RC
150   50

RC   RS   RC
150   50

RS   RC   RS
150
50

RC   50
RS
250

**Fig.8**

RC   50
RS
250

**Fig.9**

RS   50
RC
RS   250

**Fig.10**

RS   250
50
RC

**Fig.11**

50
RS
RC   250

**Fig.12**

EP 3 329 240 B1

50
IA

**Fig.13**

**EP 3 329 240 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2010290694 A
- FR 2893152
- WO 2005121740 A1